Europäisches Patentamt

(19) European Patent Office · (11) Publication number: **0 059 763**

Office européen des brevets **B1**

(12) **EUROPEAN PATENT SPECIFICATION**

⑤ · Date of publication of patent specification: **16.09.87**

(21) Application number: **81902594.1**

(22) Date of filing: **17.09.81**

(86) International application number:
**PCT/JP81/00234**

(87) International publication number:
**WO 82/01074 01.04.82 Gazette 82/09**

(51) Int. Cl.⁴: **G 01 P 3/44**, G 01 P 3/46, G 01 P 3/48, H 02 K 29/08

(54) **D.C. GENERATOR TYPE NON-CONTACT SPEED SENSING DEVICE.**

(30) Priority: **22.09.80 JP 130585/80**

(43) Date of publication of application:
**15.09.82 Bulletin 82/37**

(45) Publication of the grant of the patent:
**16.09.87 Bulletin 87/38**

(84) Designated Contracting States:
**DE FR GB**

(56) References cited:
**DE-A-2 014 542
GB-A- 913 170
JP-A-50 115 073
JP-A-51 130 809
JP-A-53 106 179
JP-A-55 122 465
JP-A-56 014 951
JP-B-49 045 882
JP-U-50 046 154
JP-U-51 024 844
US-A-3 903 462**

(73) Proprietor: **FANUC LTD
3580, Shibokusa Aza-Komanba Oshino-mura
Minamitsuru-gun Yamanashi 401-05 (JP)**

(72) Inventor: **KOZAI, Yoshinori
16-3, Hirayama 2-chome, Hino-shi
Tokyo 191 (JP)**
Inventor: **AMEMIYA, Yoichi
1019-357 Nishite-rakatamachi
Hachioji-shi Tokyo 192-01 (JP)**
Inventor: **IWAMATSU, Noboru
3-27, Tamadaira
Hino-shi Tokyo 191 (JP)**

(74) Representative: **Blumbach Weser Bergen
Kramer Zwirner Hoffmann Patentanwälte
Radeckestrasse 43
D-8000 München 60 (DE)**

Courier Press, Leamington Spa, England.

## Description

Technical field
Background art

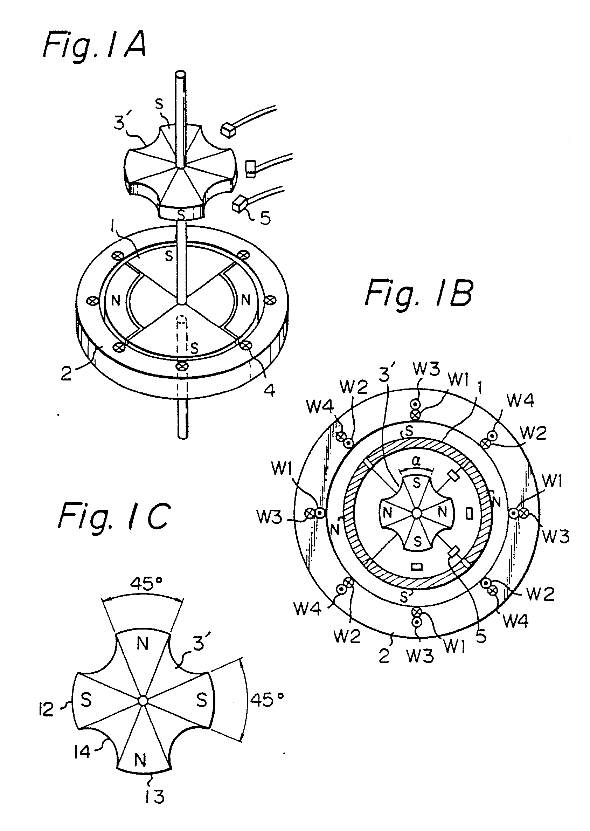

A non-contacting, speed-detecting device of a DC generator type of a prior art which is used for detecting the rotating speed of, for example, a rotary machine is illustrated in Figs. 1 (A), (B), and (C). The device of Fig. 1 comprises a cylindrical permanent magnet rotator 1 having N and S poles distributed alternatingly in the circumferential direction, a stator 2 facing said permanent magnet rotator 1, stator windings 4 wound in said stator 2, a permanent magnet 3' rotating coaxially with said permanent magnet rotator 1, and magnetic induction switches 5 positioned close to the circumference of said permanent magnet 3' so that said magnetic induction switches are actuated in response to the angular position of said permanent magnet 3', and, accordingly, the desired output signal is obtained.

In the speed-detecting device of Fig. 1, the permanent magnet rotator 1 has two S pole regions and two N pole regions alternating at 90° in the circumferential direction on its circumferential end surface. The stator 2 is arranged concentrically to and around the rotator 1 so that it is close to the circumferential end surface of the latter. In the stator 2, windings 4 of four phases ($W_1$, $W_2$, $W_3$, and $W_4$) displaced by an electric angle of 90° are wound. The permanent magnet 3' is mounted on the axis of rotation at a distance from the rotator 1 in the axial direction. The permanent magnet 3' has an S pole region a on its circumferential end surface. Four magnetic induction switches 5 are positioned on the same circle close to the circumferential end surface of the permanent magnet 3', and positioned distant from each other. Each of the magnetic induction switches is positioned so that it corresponds to a respective phase of the stator windings 4 and detects that the S region a of the permanent magnet 3' passes close to it. The structure of the permanent magnet 3' is illustrated in detail in Fig. 1 (C).

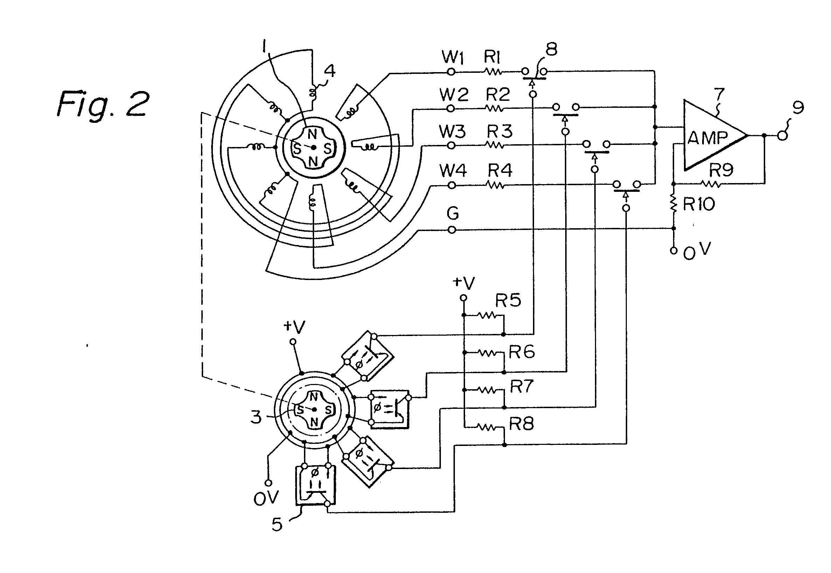

The circuit for obtaining a DC voltage output proportional to the rotating speed in accordance with the non-contacting, speed-detecting device of a DC generator type of Fig. 1 is illustrated in Fig. 2. The alternating voltage generated in each phase of the stator windings 4 is switched selectively by a semiconductor switch 8 actuated by the signal from a magnetic induction switch 5 and is inputted into the operational amplifier 7 through the resistors $R_1$, $R_2$, $R_3$, or $R_4$. The DC voltage output proportional to the rotating speed is obtained at the output terminal 9 of the operational amplifier 7. In Fig. 2, the resistors $R_5$, $R_6$, $R_7$, and $R_8$ are pull-up resistors, $R_9$ is a feed-back resistor, and $R_{10}$ is a reference input resistor.

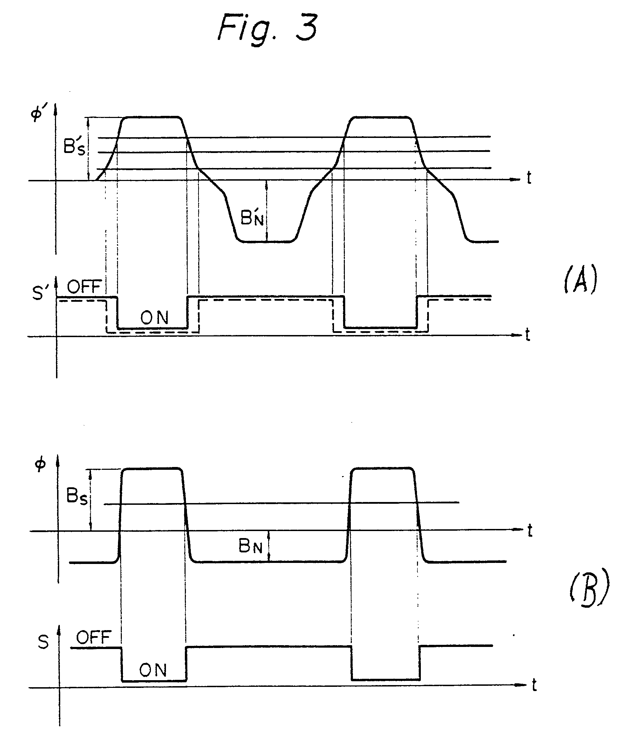

When the permanent magnet 3' is rotating at a constant speed in the speed-detecting device of Fig. 1, the variation of the magnetic flux density in regard to time at the position at which the magnetic induction switch 5 is mounted is illustrated as φ' in Fig. 3(A). The above-mentioned magnetic flux density φ' assumes a maximum value when the S pole region 12 passes the detecting position and assumes a minimum value when the N pole region 13 passes the detecting position. In the transition region 14 between the S pole region 12 and the N pole region 13, the magnetic flux density φ' changes relatively slowly from the maximum value to the minimum value, or from the minimum value to the maximum value. The actuation state of the magnetic induction switch 5 corresponding to the angular position of the permanent magnet 3' is illustrated as S' in Fig. 3(A). A device having a Hall effect or another type of device may be used as the magnetic induction switch 5. However, the operating level of such a magnetic induction switch has in general a large variation, a relatively large hysteresis, and a large dependence on external conditions. Therefore, the operating position of the magnetic induction switch 5 will change greatly in accordance with the variation of the operating level, as illustrated by the continuous line and the broken line of S' in Fig. 3.

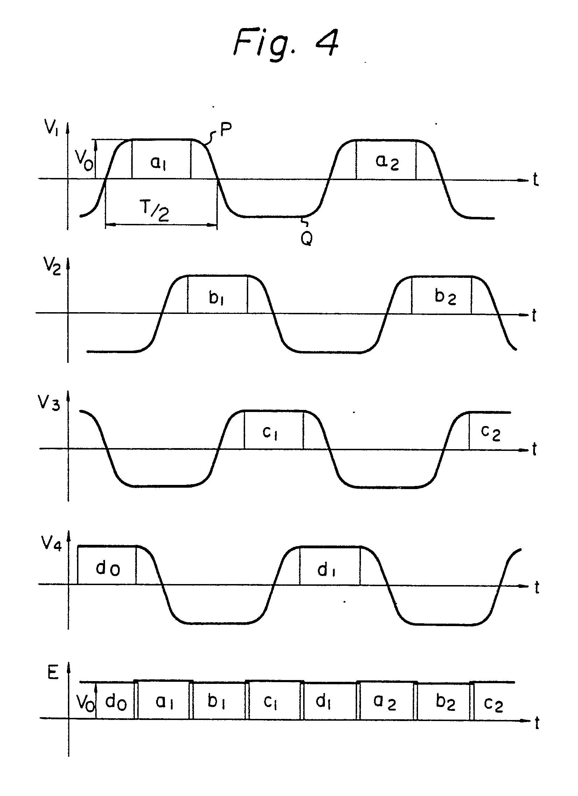

In Fig. 4, there is illustrated the manner in which the alternating output of each phase $W_1$, $W_2$, $W_3$, and $W_4$ of the stator windings 4 is switched by the switching signal in the circuit of Fig. 2 so that a DC voltage output proportional to the rotating speed is obtained. In each phase voltage wave form $V_1$, $V_2$, $V_3$, and $V_4$, the positive voltage portion P and the negative voltage portion Q have, respectively, trapezoid shapes, and the wave height $V_0$ in the portion corresponding to the upper side of trapezoid is proportional to the rotating speed. By synthesising the voltages of each phase, the DC voltage output E can be obtained. As illustrated in Fig. 4, the switched portions $a_1$, $a_2$, $b_1$, $b_2$, $c_1$, $c_2$, $d_1$, and $d_2$ of each phase voltage are included in the regions corresponding to the upper side portions of the above-mentioned trapezoids, and the switched regions of the adjacent phases overlap each other.

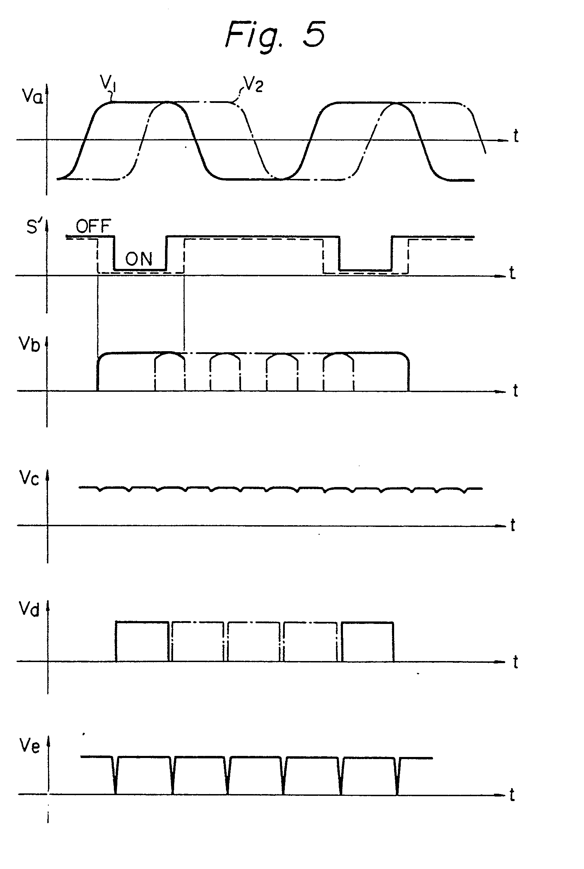

However, in the wave forms of Fig. 4, if the switched regions are too wide, the inclined parts of the trapezoid wave form P will appear in the output wave form. Such a condition is illustrated as $V_b$ and $V_c$ in Fig. 5. Conversely, if the switched regions are too narrow, the regions which are not switched in any phase appear, and in such regions great variations are produced in the output voltage. The above-mentioned condition is illustrated as $V_d$ and $V_e$ in Fig. 5. Thus, since the operating position of the magnetic induction switch 5 detecting the angular position has a random variation as described above, the result is that a variation having no relation to the rotating speed appears in the output voltage.

As described above, in the non-contacting, speed-detecting device of a DC generator type of a prior art in Fig. 1, a problem exists in that a great random variation occurs in the detection of the angular position of the rotator, a stabilized DC voltage output proportional to the rotation speed is not obtained, and it is impossible to detect the rotation speed with a high degree of accuracy.

The document DE—A—20 14 542 discloses a non contacting, speed detecting device differing from that shown in Fig. 1(a) to 1(C) with respect to the permanent magnet. In the device disclosed in DE—A—20 14 542 a hub is provided to rotate coaxially with the rotor. The hub carries a permanent magnet rod magnetized in a direction parallel to the axis of rotation. This prior art device suffers from the same problems mentioned before with regard to the device shown in Fig. 1(A) to 1(C).

Disclosure of the invention

The main object of the present invention is to eliminate the above-mentioned problem of a device of a prior art and to provide a non-contacting, speed-detecting device of a DC generator type in which the angular position of the rotator can be detected reliably so that a stabilized DC voltage output proportional to the rotating speed can be obtained and the rotating speed can be detected with a high degree of accuracy.

This object is achieved with a non-contacting, speed-detecting device of a DC generator type as claimed in claim 1.

Specific embodiments of the invention are claimed in the dependent claims.

Brief description of the drawings

Figures 1(A), (B), and (C) illustrate a non-contacting, speed-detecting device of a DC generator type of the prior art as discussed above.

Figure 2 illustrates a circuit diagram of an output generating circuit for the device of Fig. 1.

Figures 3(A) and 3(B) illustrate characteristic wave forms of the variation of the magnetic flux density of the permanent magnet and the switching signals of the magnetic induction switch in the device of Fig. 1 and in the device according to the present invention.

Figure 4 illustrates output wave forms of the respective phases of the stator windings and an output wave form for detecting the rotating speed in the device of Fig. 1.

Figure 5 illustrates wave forms which explain the transformation of the output wave form in response to the change in the operating position of the magnetic induction switch in the device of Fig. 1.

Figures 6(A), (B), and (C) illustrate a non-contacting, speed-detecting device of a DC generator type in accordance with one embodiment of the present invention.

Figure 7 illustrates a permanent magnet of a speed-detecting device in accordance with another embodiment of the present invention.

Best mode of carrying out the invention

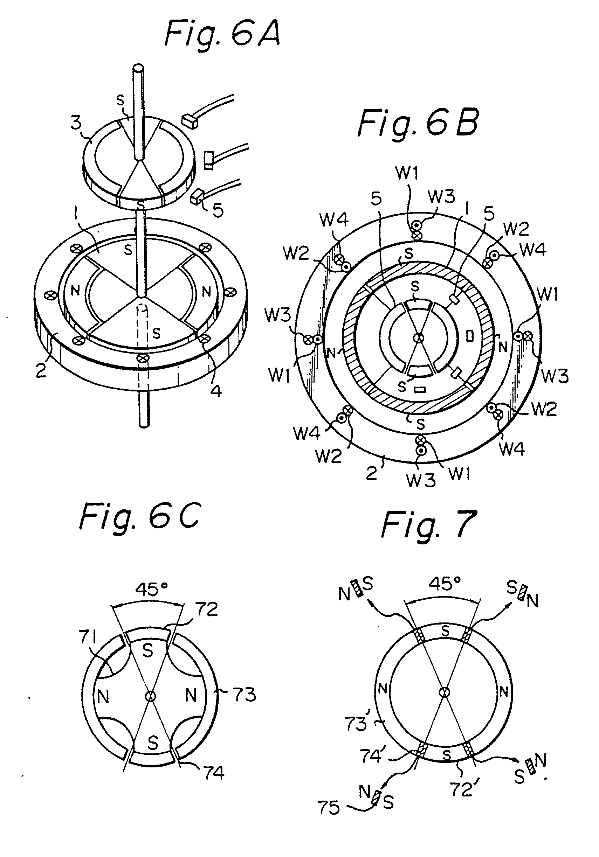

A non-contacting, speed-detecting device of a DC generator type in accordance with one embodiment of the present invention is illustrated in Figs. 6(A), (B), and (C). The device illustrated in Figs. 6(A) and (B) has the same construction as the device of a prior art illustrated in Figs. 1(A) and (B) except for the structure of the permanent magnet 3. The circuit for obtaining a DC voltage output proportional to the rotating speed in accordance with the device of Fig. 6 is the same as that in the device of Fig. 1 (this circuit is illustrated in Fig. 2 as well).

The structure of the permanent magnet 3 of the speed-detecting device according to the present invention is illustrated in detail in Fig. 6(C). The permanent magnet 3 in Fig. 6(C) has a structure in which pole shoes 72, 73 of the S pole side and the N pole side are attached to the external circumference of a permanent magnet 71 having the same shape as the magnet 3' illustrated in Fig. 1(C). The pole shoe 72 of the S pole side has an angular width of about 45° and the pole shoe 73 of the N pole side has an angular width of about 135°. There are provided gaps 74 between the adjacent ends of the pole shoes 72, 73 of the S pole side and the N pole side.

In the case where the permanent magnet 3 of the device of Fig. 6 rotates at a constant speed, the variation of the magnetic flux density is $\phi$, as shown in Fig. 3(B). When the pole shoe 72 of the S pole side passes the detecting position of the value of the magnetic flux density is a constant value $B_S$, and when the pole shoe 73 of the N pole side passes the detecting position the value of the magnetic flux density is a constant value $B_N$. The ratio between the above-mentioned $B_S$ and $B_N$ is approximately inversely proportional to the ratio of the width of the S pole region to that of the N pole region. When the gap portion 74 passes the detecting position, the value of the magnetic flux density changes rapidly and inverts the polarity from $B_S$ to $B_N$ or from $B_N$ to $B_S$. Thus, the operating position is influenced only a little by the change in the operating level, as illustrated as S in Fig. 3(B). Therefore, in the device of Fig. 6, the magnetic induction switches 5 are reliably actuated so that the voltage of each phase $W_1$, $W_2$, $W_3$, and $W_4$ of the stator windings 4 is switched in the region of the upper side of the trapezoid, and the switched regions of the adjacent phases overlap each other, as seen from the voltage wave forms in Fig. 4. Accordingly, the output voltage of the device of Fig. 6 becomes a stabilized DC wave form proportional to the rotating speed, which is illustrated as the wave form E in Fig. 4.

A permanent magnet in the speed-detecting device in accordance with another embodiment of the present invention is illustrated in Fig. 7. In the permanent magnet of Fig. 7, the pole shoes 72', 73' of the S pole side and the N pole side have approximately the same shapes as the pole shoes 72, 73 respectively illustrated in Fig. 6(C). However, they differ from those of Fig. 6(C) in that sliced permanent magnets 75 instead of a permanent magnet 71 are inserted into the adjacent portions 74' of the pole shoes 72' and 73'. The polarity of each sliced permanent magnet 75 is arranged in the direction illustrated.

According to the present invention, there is provided a non-contacting, speed-detecting device of a DC generator type wherein by reliably switching the alternating voltage generator in each phase of the stator windings at the desired angular position, a stabilized DC voltage output proportional to the rotating speed can be obtained so that the rotating speed can be detected with a high degree of accuracy.

Table of reference numerals and parts
1: a permanent magnet rotator
2: a stator
3, 3′: permanent magnets for location
4: stator windings
5: magnetic induction switches
7: an operational amplifier
8: semiconductor switches
9: an output terminal
12: S pole regions
13: N pole regions
14: transition regions
71: a permanent magnet
72, 72′: pole shoes of S pole side
73, 73′: pole shoes of N pole side
74: gaps
75: permanent magnets
$W_1, W_2, W_3,$ and $W_4$: phases of stator windings
$R_1, R_2, R_3$ and $R_4$: resistors

## Claims

1. A non contacting, speed detecting device of a direct-current generator type, comprising a cylindrical permanent magnet rotor (1) mounted inside a stator (2) having windings (4) for producing a plurality of alternating voltages, means for converting said voltages into a direct-current voltage output proportional to the speed to be detected, a permanent magnet (3) rotating coaxially with said rotor (1), magnetic induction switches (5) disposed close to the circumference of and actuated in response to the rotation of said permanent magnet (3) for detecting the angular position of said rotor (1), characterised in that the S pole regions and the N pole regions of said permanent magnet (3) extend around said circumference so that the magnetic field is inverted steeply from one polarity to another polarity around said circumference and in that the ratio of the circumferential extent of the S pole regions to that of the N pole regions is selected to be a predetermined value other than one.

2. The device as claimed in Claim 1, wherein said permanent magnet (71) comprises N pole regions and S pole regions extending in alternation around said circumference, transition regions forming gaps (74) between the N pole regions and the S pole regions, and pole shoes (72, 73) of the N pole side and the S pole side, which pole shoes (72, 73) are attached to said circumference of said permanent magnet (71) and extend up to said transition regions (74).

3. The device as claimed in Claim 1, wherein said permanent magnet comprises pole shoes (73′, 72′) of the N pole side and the S pole side, which pole shoes (73′, 72′) extend over predetermined angular regions around said circumference, and slice permanent magnets (75) inserted between pole shoes (73′) of the N pole side and pole shoes (72′) of the S pole side.

## Patentansprüche

1. Berührungslose Geschwindigkeitsfühleranordnung des Gleichstromgeneratortyps umfassend einen zylindrischen Dauermagnetrotor (1), der innerhalb eines Stators (2) montiert ist, welcher Wicklungen (4) zur Erzeugung einer Vielzahl von Wechselspannungen aufweist, eine Einrichtung zur Umwandlung der Spannungen in eine Gleichspannungsausgangsgröße, die der zu messenden Geschwindigkeit proportional ist, einen koaxial mit dem Rotor (1) rotierenden Dauermagneten (3), magnetische Induktionsschalter (5), die nahe dem Umfang des Dauermagneten (3) angeordnet sind und als Antwort auf dessen Rotation betätigt werden, um die Winkelstellung des Rotors (1) zu erfassen, dadurch gekennzeichnet, daß sich die S-Polbereiche und die N-Polbereiche des Dauermagneten (3) längs dessen Umfang erstrecken, so daß das Magnetfeld längs dem Umfang steil von einer Polarität zur anderen Polarität invertiert wird, und daß das Verhältnis der Umfangserstreckung der S-Polbereiche zu dem der N-Polbereiche auf einen vorbestimmten Wert ungleich Eins bemessen ist.

2. Anordnung nach Anspruch 1, bei der der Dauermagnet (71) N-Polbereiche und S-Polbereiche, die sich abwechselnd längs dem Umfang erstrecken, Übergangsbereiche, die zwischen den N-Polbereichen und den S-Polbereichen Spalte (74) bilden, und Polschuhe (72, 73) der N-Polseite und der S-Polseite umfaßt, welche Polschuhe (72, 73) am Umfang des Dauermagneten (71) angebracht sind und sich bis zu den Übergangsbereichen (74) erstrecken.

3. Anordnung nach Anspruch 1, bei der der Dauermagnet Polschuhe (73′, 72′) der N-Polseite und der S-Polseite, welche Polschuhe (73′, 72′) sich über vorbestimmte Winkelbereiche längs dem Umfang erstrecken, und scheibenartige Dauermagnete (75) aufweist, die zwischen Polschuhe (73′) der N-Polseite une Polschuhe (72′) der S-Polseite eingesetzt sind.

## Revendications

1. Dispositif de détection de vitesse sans contact, du type générateur de courant continu, comprenant un rotor (1) à aimant permanent cylindrique, monté à l'intérieur d'un stator (2) qui comporte des enroulements (4) destinés à produire plusieurs tensions alternatives, des moyens pour transformer ces tensions en une sortie de tension continue proportionnelle à la vitesse à détecter, un aimant permanent (3) tournant coaxialement avec le rotor (1), des commutateurs à induction magnétique (5) disposés près de la circonférence de l'aimant permanent (3) et actionnés en fonction de la rotation de ce dernier pour détecter la position angulaire du rotor (1), caractérisé en ce que les régions polaires S et les régions polaires N de l'aimant permanent ·(3) s'étendent autour de ladite circonférence de sorte que le champ magnétique s'inverse brusquement d'une polarité à une autre polarité autour de ladite circonférence, et en ce que le rapport entre la dimension circonférentielle des régions polaires S et celle des régions polaires N est choisi pour avoir une valeur prédéterminée différente de un.

2. Dispositif conforme à la revendication 1, dans lequel l'aimant permanent (71) comprend des régions polaires N et des régions polaires S s'étendant et alternance autour de ladite circonférence, des régions de transition formant des espaces (74) entre les régions polaires N et les régions polaires S, et des pièces polaires (72, 73) du côté polaire N et du côté polaire S, ces pièces polaires (73, 73) étant fixées à ladite circonférence de l'aimant permanent (71) et s'étendant jusqu'aux régions de transition (74).

3. Dispositif conforme à la revendication 1, dans lequel l'aimant permanent comprend des pièces polaires (73', 72') du côté polaire N et du côté polaire S, ces pièces polaires (73', 72') s'étendant sur des régions angulaires prédéterminées autour de ladite circonférence, et des aimants permanents découpés (75) insérés entre les pièces polaires (73') du côté polaire N et les pièces polaires (72') du côté polaire S.

Fig. 1 A

Fig. 1 B

Fig. 1 C

Fig. 2

0 059 763

# Fig. 3

(A)

(B)

# Fig. 4

# Fig. 5

*Fig. 6A*

*Fig. 6B*

*Fig. 6C*

*Fig. 7*